# EUROPEAN PATENT APPLICATION

(11) **EP 2 840 417 A1**
(43) Date of publication of application: **25.02.2015**
(21) Application number: 13778310.6
(22) Date of filing: 11.03.2013
(51) Int. Cl.: G02B 5/30, B42D 15/10, G02B 5/32

(54) **OPTICAL READING DEVICE, OPTICAL READING METHOD, AND PROGRAM**

(30) Priority: 18.04.2012 JP 2012094750
(71) Applicant: NHK Spring Co.,Ltd., Yokohama-shi Kanagawa 236-0004 (JP)
(72) Inventor: HOSHINO, Hidekazu, Yokohama-shi Kanagawa 236-0004 (JP); TAKEUCHI, Itsuo, Yokohama-shi Kanagawa 236-0004 (JP); YOSHIDA, Shinsuke, Yokohama-shi Kanagawa 236-0004 (JP); SHIBUYA, Seiya, Yokohama-shi Kanagawa 236-0004 (JP); IDA, Tohru, Yokohama-shi Kanagawa 236-0004 (JP); OKUBO, Syuhei, Yokohama-shi Kanagawa 236-0004 (JP)
(74) Representative: Eisenführ Speiser
(86) International application number: PCT/JP2013/056654
(87) International publication number: WO 2013/157323

(57) **Abstract**

An optical reading device authenticates an identification medium with cholesteric liquid crystal layer, having a structure in which no movable parts are necessary for switching circular circularly polarized light filter. The optical reading device reads an image from an identification medium having a cholesteric liquid crystal layer having a hologram processed, and an ink printed pattern layer in this order, and the device includes a light emitting part 12 in which a right circularly polarized light filter 14 is arranged in front of an LED 20, a light emitting part 13 in which a right circularly polarized light filter 17 is arranged in front of an LED 21, and a controlling part 26 which switches light emission between the light emitting parts 12 and 13.

## Description

### Technical Field

The present invention relates to techniques to determine the authenticity of passports, documents, kinds of cards, passes, paper money, cash vouchers, certificates, instruments, gift vouchers, paintings, tickets, public game voting cards, recording mediums having music or video, recording mediums having computer software, kinds of parts, kinds of products, and packages thereof and the like.

### Background Art

Japanese Patent No. 4714301 discloses a reading device, the device including a right circularly polarized light filter and a left circularly polarized light filter in order to detect circularly polarized light of a certain rotation direction which is selectively reflected by a cholesteric liquid crystal, and the device also has a structure in which one of the circularly polarized light filters is inserted in, or is removed from, an optical path.

In the structure disclosed in the Japanese Patent No. 4714301, a mechanism for moving the circularly polarized light filter is necessary in order to insert the circularly polarized light filter in the optical path or in order to remove the circularly polarized light filter from the optical path, and therefore the device should be larger and more complicated. Furthermore, it takes time to move the circularly polarized light filter, and therefore the rate of the authentication processing may be limited.

In view of such circumstances, an object of the present invention is to provide an optical reading device to authenticate an identification medium having a cholesteric liquid crystal, which has a structure in which a movable portion is not necessary to switch the circularly polarized light filter.

### Summary of the Invention

A first aspect of the present invention is an optical reading device for reading an image from an identification medium that includes a cholesteric liquid crystal layer in which a hologram is processed, and an ink printed pattern layer, arranged in this order, from a reading surface. The optical reading device includes a primary light emitting means, a primary circularly polarized light filter which is arranged in front of the primary light emitting means and which selectively transmits circularly polarized light of a primary rotating direction, a secondary light emitting means, a secondary circularly polarized light filter which is arranged in front of the secondary light emitting means and which selectively transmits circularly polarized light in a secondary rotating direction that is opposite to the primary rotating direction, and a controlling means that controls selecting one of two kinds of irradiation, one is irradiation of the circularly polarized light of the primary rotating direction from the primary circularly polarized light filter to the identification medium, and the other is irradiation of the circularly polarized light of the secondary rotating direction from the secondary circularly polarized light filter to the identification medium. According to the first aspect of the present invention, by switching emission of the two light emitting means, the hologram image from the cholesteric liquid crystal layer and the image by the ink printed pattern can be read while switching them.

A second aspect of the present invention is an optical reading device in which the cholesteric liquid crystal layer displays a primary code information that is displayed by hologram, the ink printed pattern displays a secondary code information, the primary code information display and the secondary code information display overlap at least partially, if viewed from the reading side, the primary code information is selectively read by irradiation of the primary circularly polarized light, and the secondary code information is selectively read by irradiation of the secondary circularly polarized light, in the first aspect of the invention. According to the second aspect of the invention, in a case in which two code information are read at the same time, the codes cannot be decoded, thereby obtaining extremely sensitive authentication characteristics.

A third aspect of the present invention is an optical reading device in which a total reflection cholesteric liquid crystal layer that reflects circularly polarized light having the same rotating direction as circularly polarized light selectively reflected by the circularly polarized light filter layer or the cholesteric liquid crystal layer, is arranged between the cholesteric liquid crystal layer and the ink printed pattern layer; the circularly polarized light filter layer selectively interrupts circularly polarized light selectively reflected by the cholesteric liquid crystal layer; and the total reflection cholesteric liquid crystal layer has a property of reflecting circularly polarized light of all wavelengths of incident visible light band width, or has a reflection property equivalent to a case of reflecting circularly polarized light having all wavelengths of incident visible light band width, in the first or second aspect of the invention.

According to the third aspect of the invention, in a case in which circularly polarized light selectively reflected by the cholesteric liquid crystal layer is irradiated in order to selectively read a hologram image of the cholesteric liquid crystal layer, reflected light from the ink printed pattern can be further reduced.

A fourth aspect of the present invention is an optical reading device in which a color of irradiated light of the primary rotating direction is a primary color that is as the same as a color selectively reflected by the cholesteric liquid crystal layer, and the color of irradiated light of the secondary rotating direction is as the same as a color of the ink printed pattern, and is a secondary color which is different from the primary color, in one of the first to third aspects of the invention.

According to the fourth aspect of the invention, in a case in which circularly polarized light of a rotating direction selectively reflected by the cholesteric liquid crystal layer is irradiated, since a light component which reaches the ink printed pattern can be in principle nonexistent, a property in which reflect light from the cholesteric liquid crystal layer can be selectively observed can be further obtained. Furthermore, in a case in which circularly polarized light in a rotating direction not selectively reflected by the cholesteric liquid crystal layer is irradiated, since the cholesteric liquid crystal layer does not reflect any light, a property in which reflect light from the ink printed pattern can be selectively observed can be further obtained.

A fifth aspect of the present invention is a method for optically reading image data from an identification medium, the identification medium including: a cholesteric liquid crystal layer that is arranged at a side of a reading surface and which displays a hologram image indicating primary code information, and an ink printed pattern layer that is arranged at the side opposite to the reading surface of the cholesteric liquid crystal layer and which displays secondary code overlapping with the primary code display if viewed from the reading side, and in the method, the primary code information is selectively read by irradiation of primary circularly polarized light of a primary rotating direction, and the secondary code information is selectively read by irradiation of secondary circularly polarized light of a secondary rotating direction being opposite to the primary rotating direction.

A sixth aspect of the present invention is a program for controlling reading image data from an identification medium, the identification medium including: a cholesteric liquid crystal layer that is arranged at a side of reading surface and that displays a hologram image indicating primary code information, and an ink printed pattern layer that is arranged at the side opposite to the reading surface of the cholesteric liquid crystal layer and that displays secondary code overlapping with the primary code display if seen from the reading side, the program executes: a step of reading selectively the primary code information by irradiation of a primary circularly polarized light of a primary rotating direction, and a step of reading selectively the secondary code information by irradiation of a secondary circularly polarized light of a secondary rotating direction opposite to the primary rotating direction.

According to the present invention, in an optical reading device for authenticating an identification medium including a cholesteric liquid crystal, a structure is provided in which a movable portion for switching circularly polarized light filter is not necessary.

### Brief Description of Drawings

Fig. 1 is an oblique view showing the optical reading device of an Embodiment.
Fig. 2 is a block diagram showing the optical reading device of an Embodiment.
Fig. 3 is a cross sectional view showing an identification medium that can be read by the optical reading device of an Embodiment.
Figs. 4A and 4B are diagrams showing a two dimensional barcode.
Fig. 5 is a conceptual diagram showing a situation of optical reading in an Embodiment.
Fig. 6 is a conceptual diagram showing a situation of optical reading in a Comparative Example.
Fig. 7 is a cross sectional view showing another identification medium that can be read by the optical reading device of an Embodiment.
Fig. 8 is a cross sectional view showing another identification medium that can be read by the optical reading device of an Embodiment.
Fig. 9 is a cross sectional view showing another identification medium that can be read by the optical reading device of an Embodiment.

### Explanation of Reference Numerals

10: Optical reading device, 11: light receiving part, 12: light emitting part, 13: light emitting part, 14: right circularly polarized light filter, 15: (1/4) λ, plate, 16: linear polarized light filter, 17: left circularly polarized light filter, 18: (1/4) λ plate, 19: linear polarized light filter, 100: identification medium, 101: hard coat layer, 102: cholesteric liquid crystal layer, 103: hologram processing, 104: printed pattern, 105: adhesive layer, 200: identification medium, 201: circularly polarized light filter layer, 202: (1/4) λ, plate, 203: linear polarized light filter, 300: identification medium, 301: visible light all band reflecting cholesteric liquid crystal layer, 302: red right circularly polarized light selective reflecting cholesteric liquid crystal layer, 303: green right circularly polarized light selective reflecting cholesteric liquid crystal layer, 304: blue right circularly polarized light selective reflecting cholesteric liquid crystal layer, 400: identification medium, 401: film substrate, 402: letter printed pattern, 403: primary code forming area, and 404: secondary code forming area.

### Mode for Carrying Out the Invention

### Structure of Optical Reading Device

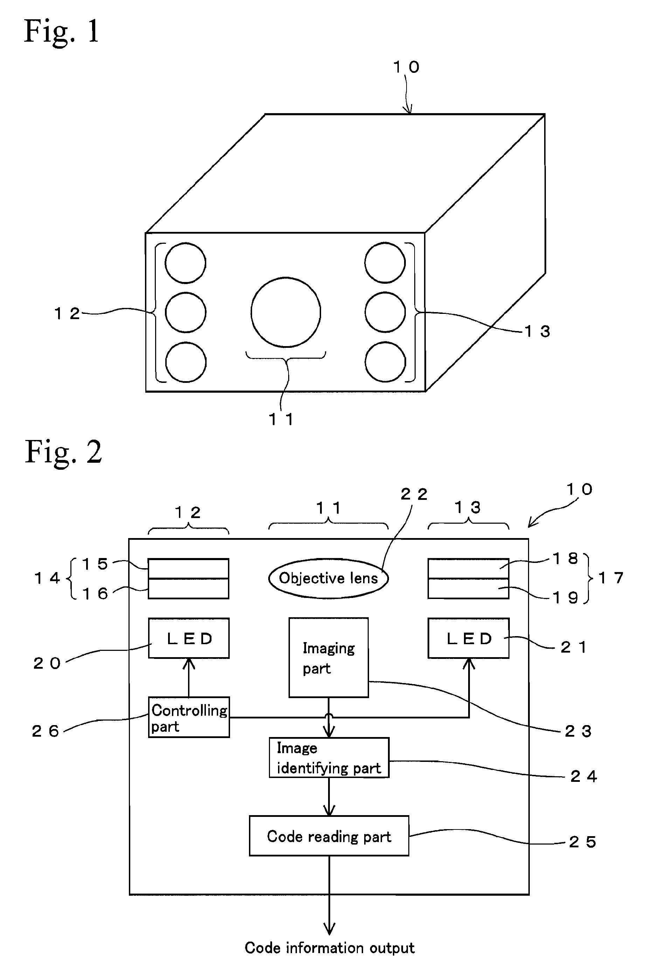

Fig. 1 shows an oblique view of an optical reading device 10 of Embodiment, and Fig. 2 shows a block view of the optical reading device 10. The optical reading device 10 includes a light receiving part 11, light emitting parts 12 and light emitting parts 13. The light receiving part 11 includes an objective lens 22 and an imaging part 23. The objective lens 22 is a lens constructing an optical system of the light receiving part 22. In the figure, the objective lens is described as the optical system, and a more complicated optical system can be employed. The imaging part 23 is a camera constructed by a CCD camera or a CMOS image sensor, and transforms an image that is received by the light receiving part 11 into electronic data.

The optical reading device 10 includes an image identifying part 24 and a code reading part 25. The image identifying part 24 identifies contents of an image that is photographed by the imaging part 23. The code reading part 25 reads a code (bar code, hologram code, letter code or the like) that is contained in the image that is identified by the image identifying part 24. This code contains an authenticity decision and product information or the like. The code information that is read at the code reading part 25 is output to the outside. It should be noted that a structure is also possible in which the optical reading device 10 includes therein a deciding means for making a decision of authenticity based on the contents of the code or a detecting means for detection of secondary information (product information such as product number, production history or the like, for example) based on the contents of the code.

As shown in Fig. 1, the light emitting part 12 is arranged in three parts vertically, if viewed from the front of the optical reading device 10. The structure of one part of the light emitting part 12 among the three parts vertically arranged is explained as follows (the other two parts have the same structure). The light emitting part 12 includes a right circularly polarized light filter 14 and an LED 20, which is a light emitting means. Here, one that emits white light is selected as the LED 20.

The right circularly polarized light filter 14 transforms light that is emitted by the LED 20 into right circularly polarized light, and irradiates only the right circularly polarized light onto an object (upper direction in Fig. 2). The right circularly polarized light filter 14 has a structure in which a (1/4) λ, plate 15 and a linear polarized light filter 16 are layered. In this structure, linear polarized light that is polarized in a certain direction in the light that is emitted by the LED 20 is transmitted through the linear polarized light filter 16, and then enters into the (1/4) λ, plate 15. The direction of light polarization of the linear polarized light filter 16 and the direction of refractive index anisotropy of the (1/4) λ, plate 15 are set so that light that exits in the upper direction in Fig. 2 from the (1/4) λ, plate 15 will be right circularly polarized light. Therefore, white light from the light source of LED 20 exits from the light emitting part 12 in the upper direction in the figure as right circularly polarized light.

The light emitting part 13 is arranged in three parts vertically. The structure of one part of the light emitting part 13 among the three parts vertically arranged is explained as follows (the other two parts have the same structure). The light emitting part 13 includes a left circularly polarized light filter 17 and an LED 21, which is a light emitting means. The left circularly polarized light filter 17 transforms white light that is emitted by the LED 21 into left circularly polarized light, and irradiates only the left circularly polarized light to an object (upper direction in Fig. 2). The left circularly polarized light filter 17 has a structure in which a (1/4) λ plate 18 and a linear polarized light filter 19 are stacked. In this structure, linear polarized light that is polarized in a certain direction among white light that is emitted by the LED 21 is transmitted through the linear polarized light filter 19, and then enters into the (1/4) λ plate 18. The direction of light polarization of the linear polarized light filter 19 and the direction of refractive index anisotropy of the (1/4) λ, plate 18 are set so that light that exits in the upper direction in Fig. 2 from the (1/4) λ, plate 18 will be left circularly polarized light. Therefore, light from the light source of LED 21 exits from the light emitting part 13 as left circularly polarized light.

The timing of light emission of the LEDs 20 and 21 is determined by a controlling part 26. The controlling part 26 switches a power source of the LEDs 20 and 21 ON and OFF, and controls switching light emission between the LED 20 and the LED 21. The structure of the light emitting part 12 is not limited in the structure of three vertical parts, and a structure in which right circularly polarized light exits from one position, a structure in which multiple parts are arranged horizontally, a structure in which multiple parts are arranged along the circumference of the light receiving part 11, or the like can be employed. Similar structures can be employed with respect to the light emitting part 13.

### Structure of Identification Medium

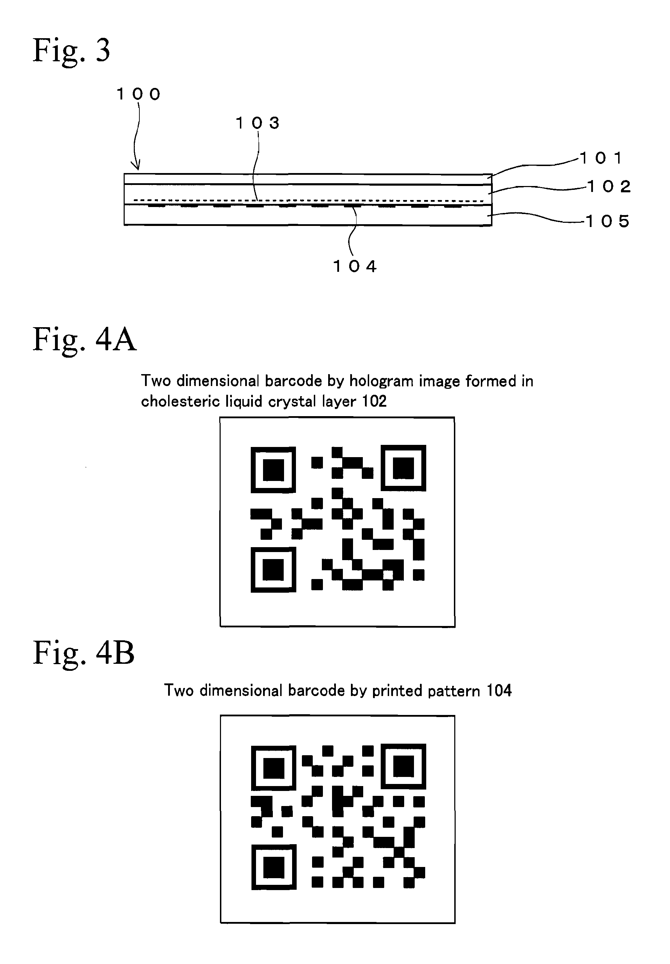

Fig. 3 shows an identification medium 100 that is read by the optical reading device 10 shown in Figs. 1 and 2. The identification medium 100 has a layered structure in which a hard coat layer 101, a cholesteric liquid crystal layer 102, a printed pattern 104, and an adhesive layer 105 are arranged from the observation side. The hard coat layer 101 is a protective layer that is constructed of a transparent material that does not disturb a light polarization condition of transmitted light.

A hologram processing 103 that is embossed is formed in the cholesteric liquid crystal layer 102. In this example, the cholesteric liquid crystal layer 102 is set so as to selectively reflect red right circularly polarized light. Of course, a setting to selectively reflect the central wavelength of another color or a setting to selectively reflect left circularly polarized light can be employed. The hologram processing 103 forms the hologram image that displays a two dimensional barcode exemplified in Fig. 4A. That is, the hologram processing 103 formed in the cholesteric liquid crystal layer 102 is one in which an embossed pattern is formed in the cholesteric liquid crystal layer 102 by embossing. In a case in which reflected light from the cholesteric liquid crystal layer 102 is observed, the two dimensional barcode shown in Fig. 4A is observed by optical interference due to this embossed pattern. It should be noted that the hologram processing 103 can be performed from any surface (upper surface or lower surface) of the cholesteric liquid crystal layer 102, and similar optical function can be obtained in both cases.

The printed pattern 104 is constructed by printing ink on one surface of the cholesteric liquid crystal layer 102 (lower side surface in Fig. 3 in the case of this example) at a predetermined pattern by an inkjet method. The printed pattern 104 has a pattern for displaying a two dimensional barcode shown in Fig. 4B. The two dimensional barcode by the hologram image based on the hologram processing 103 shown in Fig. 4A and the two dimensional barcode based on the printed pattern 104 shown in Fig. 4B are different from each other, as shown in the design of Fig. 4, and they are set to show different contents of code from each other. Furthermore, the two dimensional barcode shown in Fig. 4A and the two dimensional barcode shown in Fig. 4B overlap at least partially in the thickness direction of the identification medium 100.

As the adhesive layer 105, a transparent material is used. However, as long as reading of the two dimensional barcode of Fig. 4B is not adversely affected, pigment that is black, dark blue or the like, functioning as a light absorbing layer, can be mixed in. The adhesive layer 105 has a function of adhering the identification medium 100 onto an object, and it can have a function as a light absorbing layer in which a background of the cholesteric liquid crystal layer 103 and the printed pattern 104 is maintained to be dark, if necessary. It should be noted that in a condition in which it is not adhered to an object, a separator (release paper), which is not shown in the figure, is adhered on an exposed surface of the adhesive layer 105.

### Identifying Method

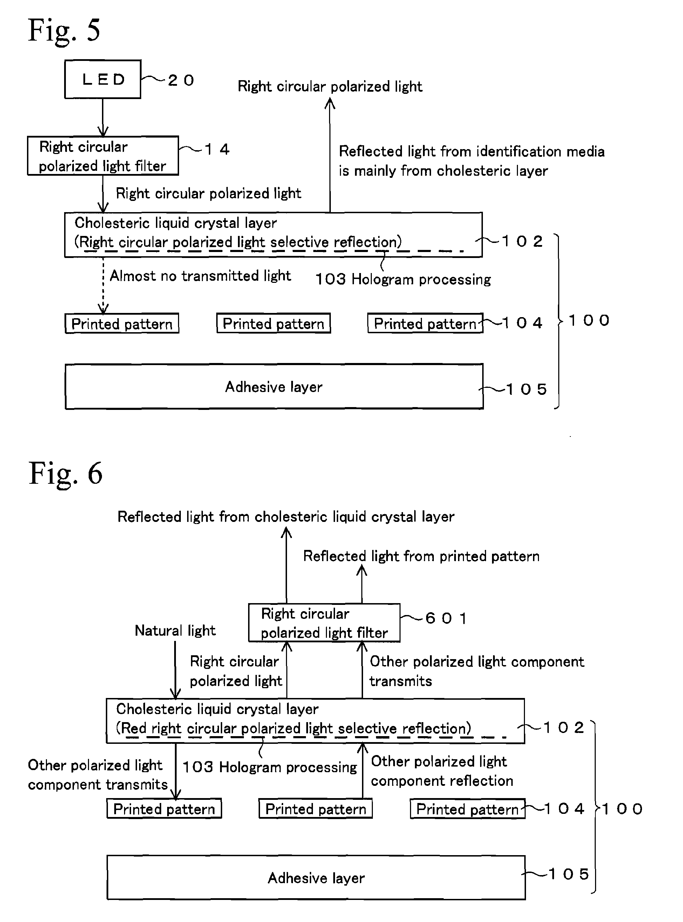

One example of authentication of the identification medium 100 of Fig. 3 using the optical reading device of Fig. 1 is explained below. The identification is performed in a condition in which the optical reading device 10 faces a surface of the hard coat layer 101 side of the identification medium 100. First, a case in which the LED 20 emits light and the LED 21 does not emit light is explained. This situation is conceptually shown in Fig. 5. In this case, light that is emitted from the LED 20 is made into right circularly polarized light in the right circularly polarized light filter 14, and is irradiated to the identification medium 100.

Here, only light that enters into the cholesteric liquid crystal layer 102 from the LED 20 is right circularly polarized light. Left circularly polarized light and linear polarized light are not contained in light incident on the cholesteric liquid crystal layer 102 produced by the LED 20. Therefore, reflection from the printed pattern 104 is weak, reflection from the cholesteric liquid crystal layer 102 is stronger, the two dimensional barcode (see Fig. 4A) caused by the hologram processing 103 that is arranged in the cholesteric liquid crystal layer 102 is identified at image identifying part 24 (see Fig. 2), and furthermore, the code content is read by the code reading part 25. During this process, the two dimensional barcode of Fig. 4B constructed by the printed pattern 104 is not read.

Next, a case in which the LED 21 emits light and the LED 20 does not emit light is explained. In this case, light that is emitted from the LED 21 is made into left circularly polarized light by the left circularly polarized light filter 17, and it is irradiated on the identification medium 100. Here, since only incident light from the LED 21 to the cholesteric liquid crystal layer 102 is left circularly polarized light, the incident light is transmitted through the cholesteric liquid crystal layer 102, which is set to selectively reflect right circularly polarized light, and reaches the printed pattern 104. Left circularly polarized light that reached the printed pattern 104 is reflected at the printed pattern 104, the condition of light polarization is disturbed at this time, and a polarized light component which can be transmitted through the cholesteric liquid crystal layer 102 (hereinafter referred to as the "other polarized light component") is reflected in the direction of the cholesteric liquid crystal layer 102 (upper direction in the figure).

Other polarized light components that are reflected at the printed pattern 104 are transmitted through the cholesteric liquid crystal and enter into the light receiving part 11. This "other polarized light component" is light reflected from the printed pattern 104, and contains an image of the two dimensional barcode shown in Fig. 4B, and is transmitted through the cholesteric liquid crystal layer 102. Therefore, the image of the two dimensional barcode shown in Fig. 4B is identified at the image identifying part 24 (see Fig. 2), and the content of the code is read by the code reading part 25. At this time, since the cholesteric liquid crystal layer 102 is optically transparent and therefore invisible, the two dimensional barcode in Fig. 4A cannot be read.

As explained so far, by turning on one of LED 20 and LED 21 and turning off the other, one of the two dimensional barcodes shown in Figs. 4A and 4B can be selectively read. Furthermore, by turning on one of LED 20 and LED 21 and turning off the other, in a case in which a human observes reflected light from the identification medium of Fig. 4A, a case in which a hologram reflected image from the cholesteric liquid crystal layer 102 is selectively viewed and a case in which an image of the printed pattern 104 is selectively viewed can be switched.

The steps to read information from the identification medium 100 that is explained so far can be executed by a software program. In this case, the controlling part 26 is made to function as a computer, and a program to execute the above steps is stored in a memory region that is owned by the controlling part 26 (or in a recording region arranged at another appropriate part). Then, by the controlling part 26 functioning as a computer, this program is read and executed, so that the above steps are performed by the optical reading device 10. It should be noted that the program can be one that is stored in an appropriate recording medium and is then provided therefrom. Furthermore, a structure is possible in which the program is executed in a commercially available personal computer, a control signal is sent from this personal computer to the controlling part 26, and then the operation of the optical reading device 10 is controlled.

### Comparative Example

Hereinafter, a case is explained in which natural light is irradiated on the identification medium 100 and reflected light is observed via the circularly polarized light filter, without arranging the circularly polarized filter in front of the LED. Fig. 6 shows a diagram that shows this situation conceptually. Fig. 6 corresponds to Fig. 5, and the difference therebetween is that the circularly polarized light filter is arranged in front of the light source or in front of the detecting part. It should be noted that in the case of Fig. 6, the circularly polarized light filters 14 and 17 are removed, and therefore white light that is emitted from the light emitting parts 12 and 13 is not in a condition of specific light polarization.

In this case, red right circularly polarized light is reflected from the cholesteric liquid crystal layer 102, and the other component (right circularly polarized light of other than red, left circularly polarized light, and linear polarized light) transmits the cholesteric liquid crystal layer 102 and reaches the printed pattern 104. The red circularly polarized light that is reflected from the cholesteric liquid crystal layer 102 transmits the right circularly polarized light filter 601 and received at the light receiving part 11.

On the other hand, the light component that reaches the printed pattern 104 is reflected there. In this case, conditions of light polarization are disturbed, and a polarized light component that can be transmitted through the cholesteric liquid crystal layer 102 (hereinafter referred to as the other polarized light component) is reflected from the printed pattern 104 in the direction of the cholesteric liquid crystal layer 102 (upper direction in the figure). This "other polarized light component" is transmitted through the cholesteric liquid crystal layer 102 from a lower part of the figure in the upward direction, is transmitted through the right circularly polarized light filter 601, and is received at the light receiving part 11.

That is, in the case of Fig. 6, despite that reflected light is detected from the identification medium 100 via the right circularly polarized light filter 601, the two dimensional barcode of Fig. 4A and the two dimensional barcode of Fig. 4B are detected at the same time. Since the two dimensional barcode of Fig. 4A and the two dimensional barcode of Fig. 4B have their overlapped portion, in the case of the Comparative Example in Fig. 6, code information of the two dimensional barcodes cannot be detected individually. Furthermore, in a case in which reflected light from the identification medium 100 is detected directly not using the circularly polarized light filter 601, the two dimensional barcode of Fig. 4A and the two dimensional barcode of Fig. 4B are detected at the same time, and thus the situation is the same.

Next, an example is explained in which the right circularly polarized light filter 601 is substituted with the left circularly polarized light filter 602 in Fig. 6. In this case, since red right circularly polarized light reflected from the cholesteric liquid crystal layer 102 is blocked by the circularly polarized light filter 602, reflected light from the printed pattern 104 selectively reaches the light receiving part 11, and the optical reading device 10 can selectively detect the two dimensional barcode of Fig. 4B.

As explained so far with reference to Fig. 6, in the case in which reflected light from the identification medium 100 is detected via the circularly polarized light filter, two two-dimensional barcodes shown in Fig. 4 cannot be switched and detected individually even if the left and right circularly polarized light filters are switched.

### Other Aspects

Fig. 4 shows an example of the two dimensional barcode, but the structure of the code display is not limited only to this, and a one dimensional barcode, a micro letter code, an OCR code or combination thereof can be employed. Furthermore, a construction is possible in which one of the codes shown in Fig. 4A or 4B is set as a picture display and one of the code or the picture is selectively read. In this case, identification is performed by identification by visual inspection or image analysis. It should be noted that as a picture other than a code display, a letter, diagram, pattern, kinds of design display, or combination thereof can be mentioned.

### Modifications

A color that is emitted by the light emitting part 12 in the optical reading device 10 shown in Fig. 1 and Fig. 2 and a color that is selectively reflected by the cholesteric liquid crystal layer 102 in the identification medium 100 shown in Fig. 3 are set to the same specific primary color. Furthermore, a color that is emitted by the light emitting part 13 and a color of the printed pattern 104 are set to the same specific secondary color that is different from the primary color. For example, setting is performed so that the light emitting part 12 emits red, and the cholesteric liquid crystal layer 102 selectively reflects red right circularly polarized light. Furthermore, setting is performed so that the light emitting part 13 emits green, and the printed pattern 104 is formed by green ink. It should be noted that as a method to specify emitting color of light emitting parts 12 and 13, a method using a color filter or a method using an LED that emits a specific color can be mentioned.

In this case, in the operation construction shown in Fig. 5, red right circularly polarized light is irradiated from the optical reading device 10 onto the identification medium 100, and all of it is reflected by the cholesteric liquid crystal layer 102. Therefore, little light reaches the printed pattern 104, and a situation is emphasized in which the printed pattern 104 is nearly invisible. That is, the situation is exhibited in which the two dimensional barcode of Fig. 4A can be seen and the two dimensional barcode of Fig. 4B cannot be seen (S/N ratio is increased more).

Furthermore, in the case in which the LED 21 emits light and the LED 21 does not emit light, green left circularly polarized light is irradiated to the identification medium 100. During this time, there is no reflection from the cholesteric liquid crystal layer 102, and green printed pattern 104 can be selectively seen. That is, the two dimensional barcode of Fig. 4A cannot be seen and the two dimensional barcode of Fig. 4B can be seen. For example, if right circularly polarized light is generated due to disturbance of light polarization conditions, since the red component is not contained (because green light is irradiated), there is no reflection generated from the cholesteric liquid crystal layer 102, and there is an extremely low probability that the hologram image shown in Fig. 4A that is formed in the cholesteric liquid crystal layer 102 is visible.

It should be noted that another combination is possible, such as a case in which the light emitting part 12 emits green light, the cholesteric liquid crystal layer 102 selectively reflects green left circularly polarized light, the light emitting part 13 emits red light, and the printed pattern 104 is red.

### Other Identification Medium 1

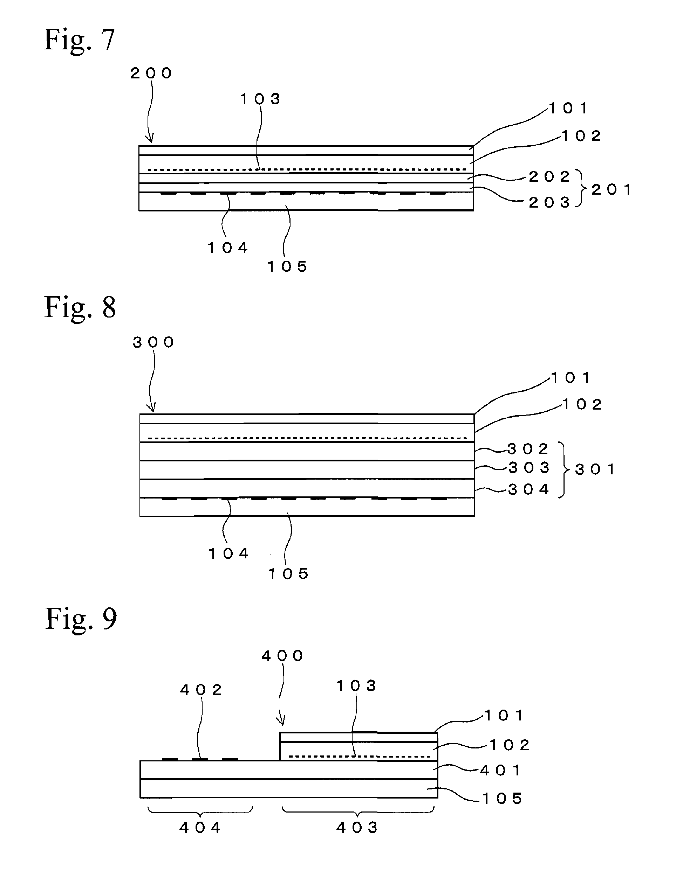

Fig. 7 shows an identification medium 200 which can be read by the optical reading device 10. In the identification medium 200, the technique disclosed in the above Japanese Patent No. 4714301 is used. The identification medium 200 further includes a circularly polarized light filter layer 201 in addition to the structure of the identification medium 100 shown in Fig. 3. It should be noted that the same explanation is applied to a part in Fig. 7 having a reference numeral that is the same as that in Fig. 3.

The circularly polarized light filter layer 201 includes a structure in which a (1/4) λ plate 202 and a linear polarized light filter layer 203 are layered seen from the reading side, selectively blocks circularly polarized light (right circularly polarized light in this case) which is selectively reflected by the cholesteric liquid crystal layer 102, and selectively transmits circularly polarized light of the opposite rotating direction (left circularly polarized light in this case). Furthermore, in a case in which natural light enters from the surface of the circularly polarized light filter layer 201 opposite to the cholesteric liquid crystal layer 102 side, the circularly polarized light filter 201 selectively transmits circularly polarized light of the rotation direction opposite to the rotation direction of the circularly polarized light that is selectively reflected by the cholesteric liquid crystal layer 102 (left circularly polarized light in this case), against the cholesteric liquid crystal layer 102.

In this structure, in a case in which right circularly polarized light is irradiated onto the identification medium 200, right circularly polarized light other than red which transmitted through the cholesteric liquid crystal layer 102 is blocked at the circularly polarized light filter layer 201 and does not reach the printed pattern 104. Therefore, in a case in which right circularly polarized light is irradiated onto the identification medium 200, only the reflected light from the cholesteric liquid crystal layer 102 is preferentially read, and reflected light from the printed pattern 104 is rarely readable. That is, a situation is exhibited in which the two dimensional barcode of Fig. 4A is read and the two dimensional barcode of Fig. 4B cannot be read.

Furthermore, in this structure, since the only incident light that is reflected from the printed pattern 104 and enters in the cholesteric liquid crystal layer 102 is left circularly polarized light, the problem which is already explained in the Comparative Example in Fig. 6 is solved, that is, the problem in which the printed pattern 104 is visible via the right circularly polarized light filter under natural ambient light. It should be noted that in a setting in which the cholesteric liquid crystal layer 102 selectively reflects left circularly polarized light, the circularly polarized light filter layer 201 is set so that left circularly polarized light is blocked and right circularly polarized light is selectively transmitted. Other Identification Medium 2

Fig. 8 shows an identification medium 300 that can be read by the optical reading device 10. The identification medium 300 includes a structure in which a visible light all-band reflecting cholesteric liquid crystal layer 301 is layered on a lower surface of the cholesteric liquid crystal layer 102, in addition to the structure of the identification medium 100 shown in Fig. 3.

The visible light all-band reflecting cholesteric liquid crystal layer 301 has an optical property in which right circularly polarized light is selectively reflected, and under natural lighting, circularly polarized light that is selectively reflected is seen as light of all-band visible light. That is, its property is not a property in which a specific wavelength band range is selectively reflected; rather it is a property in which all the wavelengths of the incident visible light band range is reflected, or a reflection property equivalent to a case in which all the wavelengths of the incident visible light band range is reflected.

It should be noted that this is referred to as the "visible light all-band range" here as a matter of convenience, and this is not limited to a case containing all the components of the band range of visible light, and a case is also included which is a reflection property having a wavelength spectrum which is seen as light including visible light of the entire band if seen by a human due to combination of multiple wavelength peaks therein. Furthermore, hereinafter, a case is explained in which the visible light all-band range cholesteric liquid crystal layer 301 selectively reflects right circularly polarized light; however, it can be set so that left circularly polarized light is selectively reflected.

Hereinafter, the visible light all-band range reflecting cholesteric liquid crystal layer 301 is explained in detail. First, in an ordinary cholesteric liquid crystal layer, circularly polarized light having a specific rotation direction and specific central wavelength such as red or green is selectively reflected, and circularly polarized light of the opposite rotation direction, linear polarized light, and circularly polarized light having the above specific rotation direction and having wavelength component other than the above central wavelength are transmitted without being reflected. This is because the wavelength of light that is selectively reflected is decided based on the size of pitch of the cholesteric liquid crystal layer. On the other hand, the visible light all-band range reflecting cholesteric liquid crystal layer 301 selectively reflects circularly polarized light of all bands of visible light having specific rotation direction (or wavelength spectrum that can be so regarded). Of course, linear polarized light and circularly polarized light of opposite rotation direction is transmitted. This optical property can be obtained by complexing the cholesteric liquid crystal layer with multiple pitches. The visible light all-band range cholesteric liquid crystal layer is disclosed in Japanese Patent No. 3373374, for example.

The visible light all-band range reflecting cholesteric liquid crystal layer 301 is constructed of three layers: a primary cholesteric liquid crystal layer 302, a secondary cholesteric liquid crystal layer 303, and a tertiary cholesteric liquid crystal layer 304. Here, the cholesteric liquid crystal layer 302 is set to selectively reflect red right circularly polarized light (wavelength 650 ± 100 nm), the cholesteric liquid crystal layer 303 is set to selectively reflect green right circularly polarized light (wavelength 550 ± 100 nm), and the cholesteric liquid crystal layer 304 is set to selectively reflect blue right circularly polarized light (wavelength 450 ± 100 nm). Furthermore, the printed pattern 104 is formed at the tertiary cholesteric liquid crystal layer 304 of the adhesive layer 105 side.

A case is assumed in which natural light enters in this three-layer structure visible light all-band range reflecting cholesteric liquid crystal layer 301 from an upper direction of Fig. 8. In this case, red right circularly polarized light is selectively reflected from the primary cholesteric liquid crystal layer 302, green right circularly polarized light is selectively reflected from the secondary cholesteric liquid crystal layer 303, and blue right circularly polarized light is selectively reflected from the tertiary cholesteric liquid crystal layer 304. During this time, since the primary cholesteric liquid crystal layer 302 transmits wavelength components of green and blue despite light polarization conditions and the secondary cholesteric liquid crystal layer 303 transmits wavelength components of blue despite light polarization conditions, right circularly polarized red, green, and blue light are reflected from the visible light all range reflecting cholesteric liquid crystal layer 301 in the upper direction of Fig. 8.

As the visible light all-band range reflection cholesteric liquid crystal layer 301, in addition to the layered type shown in Fig. 8, a structure can be employed in which three kinds of cholesteric liquid crystals selectively reflecting circularly polarized light of the same rotation direction of red, green and blue is formed in stripes, grids, or dots having widths of about 50 µm. Furthermore, material in which the pitch of the cholesteric liquid crystal is continuously changed like gradation so as to have properties reflecting circularly polarized light of a wavelength band width having a width to some extent, can be used as the visible light all-band range reflection cholesteric liquid crystal layer 105.

Furthermore, in addition to an RGB system, it is possible to produce conditions in which the human eye see it as if visible light of the entire range were reflected, by a combination of two colors or four colors or more. Of course, it is possible to obtain reflect light of a wavelength spectrum which covers as wide a visible light band range as possible, so as to have a property in which substantially the all-band range of visible light is reflected. It should be noted that the thickness of the visible light all-band range reflection cholesteric liquid crystal layer 301 may be in a range of 0.5 µm to 10 µm, and is desirably in a range of 1 µm to 5 µm.

The optical function of the identification medium 300 is basically the same as the identification medium 100; however, in a case in which right circularly polarized light from the LED 20 enters therein, since intensity of reflecting light from the cholesteric liquid crystal layer becomes weaker than in the case of reflection of a single color (for example, the case of the identification medium of Fig. 3), reflection from the printed pattern 104 may be weaker, and therefore, reflected light of the hologram image based on the hologram processing 103 (for example, the image of the two dimensional barcode shown in Fig. 4A) can be detected (or observed) to be brighter. Other Identification Medium 3

Fig. 9 shows an identification medium 400 which can be read by the optical reading device 10. The identification medium 400 is an example in which the two dimensional barcode (Fig. 4A) of the hologram image and the two dimensional barcode (Fig. 4B) by printed patterns both shown in Fig. 4 are arranged in a plane and another two dimensional barcode by printed pattern is further formed by a re-write printing using leuco dye or the like. It should be noted that the same explanation is applied to a part having a reference numeral the same as that in Fig. 3.

The identification medium 400 shown in Fig. 9 includes a primary code forming region 403 and a secondary code forming region 404. In the primary code forming region 403, the two dimensional barcode display that is exemplified in Fig. 4A based on the hologram processing 103 is formed. In the secondary code forming region 404, the two dimensional barcode display that is exemplified in Fig. 4B by printed pattern 402 of the re-write layer is formed. Here, reference numeral 401 is a film substrate such as PET, the re-write layer is arrange on the front surface side of the film substrate 401, and the adhesive layer 105 is arranged on the back surface side.

The printed letter pattern 402 in the re-write layer can be re-written by using a dedicated printing and erasing device. Here, by combining code formed in the primary code forming region 403 and code information of the secondary code forming region 404, it is set to obtain predetermined specific information.

Identification function of the identification medium 400 is explained below. Here, a case is explained in which the cholesteric liquid crystal layer 102 is set to selectively reflect right circularly polarized light, and optical reading is performed by using the optical reading device 10 shown in Fig. 1.

First, a case is explained in which reading is performed while the light emitting part 12 emits light and the light emitting part 13 does not emit light. In this case, reflected light from the printed pattern 402 and reflected light from the cholesteric liquid crystal layer 102 enters the light receiving part 11. Therefore, the two dimensional barcodes shown in Figs. 4A and 4B are read by the optical reading device 10, and the content of the code displayed in the identification medium 400 can be read.

Next, in a case in which the light emitting part 12 does not emit light and the light emitting part 13 emits light, since left circularly polarized light is irradiated onto the cholesteric liquid crystal layer 102, reflected light from the printed pattern 402 can be read; however, reflected light from the cholesteric liquid crystal layer 102 cannot be read. Therefore, the optical reading device 10 can only read one of the two dimensional barcodes shown in Figs. 4A and 4B, and the content of the code shown in the identification medium 400 cannot be read. In this way, authenticity can be determined depending on combination of light emitting pattern and reading data pattern. Furthermore, a type shown in Fig. 7 or Fig. 8 can be used in the primary code forming region 403.

Since the content of the code can be re-written in a case in which re-write printing is used, the structure of the identification medium 400 can be applied to identification of an object for which it is necessary to re-write partially at a certain interval, such as for a commuting pass or a gate pass, for example. Furthermore, security can be further increased by encrypting the printed pattern code of Fig. 4B using the hologram code of the Fig. 4A.

The present invention can be used as a technique to confirm authenticity.

## Claims

1. An optical reading device for reading an image from an identification medium, the identification medium comprising:
a cholesteric liquid crystal layer in which a hologram is processed; and
an ink printed pattern layer,
the layers arranged in this order from a reading surface,
the optical reading device comprising:
a primary light emitting means;
a primary circularly polarized light filter arranged in front of the primary light emitting means and which selectively transmits circularly polarized light of a primary rotating direction,
a secondary light emitting means;
a secondary circularly polarized light filter arranged in front of the secondary light emitting means and which selectively transmits circularly polarized light of a secondary rotating direction opposite to the primary rotating direction; and
a controlling means that controls selecting one of two kinds of irradiation,
one is irradiation of the circularly polarized light of the primary rotating direction from the primary circularly polarized light filter to the identification medium, and the other is irradiation of the circularly polarized light of the secondary rotating direction from the secondary circularly polarized light filter to the identification medium.

2. The optical reading device according to claim 1, wherein
the cholesteric liquid crystal layer displays primary code information that is displayed by hologram,
the ink printed pattern displays a secondary code information,
the primary code information display and the secondary code information display overlap at least partially, when viewed from the reading side,
the primary code information selectively read by irradiation of the primary circularly polarized light, and
the secondary code information selectively read by irradiation of the secondary circularly polarized light.

3. The optical reading device according to either of claims 1 and 2, wherein
a total reflection cholesteric liquid crystal layer reflects circularly polarized light having the same rotating direction as circularly polarized light selectively reflected by the circularly polarized light filter layer or the cholesteric liquid crystal layer is arranged between the cholesteric liquid crystal layer and the ink printed pattern layer,
the circularly polarized light filter layer selectively interrupts circularly polarized light selectively reflected by the cholesteric liquid crystal layer, and
the total reflection cholesteric liquid crystal layer has a property of reflecting circularly polarized light of all wavelengths of incident visible light band width, or has a property equivalent to a case of reflecting circularly polarized light having all wavelengths of incident visible light band width.

4. The optical reading device according to any one of claims 1 to 3, wherein
a color of irradiated light of the primary rotating direction is a primary color which is the same as a color selectively reflected by the cholesteric liquid crystal layer, and
a color of irradiated light of the secondary rotating direction is the same as a color of the ink printed pattern, and is a secondary color that is different from the primary color.

5. A method for optical reading image data from an identification medium, the identification medium comprising:
a cholesteric liquid crystal layer arranged at a side of a reading surface and which displays a hologram image indicating primary code information, and
an ink printed pattern layer which is arranged at the side opposite to the reading surface of the cholesteric liquid crystal layer and which displays secondary code overlapping with the primary code display if seen from the reading side, wherein
the primary code information is selectively read by irradiation of primary circularly polarized light of a primary rotating direction, and
the secondary code information is selectively read by irradiation of secondary circularly polarized light of a secondary rotating direction opposite to the primary rotating direction.

6. A program for controlling reading image data from an identification medium,
the identification medium comprising:
a cholesteric liquid crystal layer arranged at a side of a reading surface and which displays a hologram image indicating primary code information, and
an ink printed pattern layer arranged at the side opposite to the reading surface of the cholesteric liquid crystal layer and which displays secondary code overlapping with the primary code display when viewed from the reading side, wherein
the program executes:
a step of reading selectively the primary code information by irradiation of primary circularly polarized light of a primary rotating direction, and
a step of reading selectively the secondary code information by irradiation of secondary circularly polarized light of a secondary rotating direction opposite to the primary rotating direction.
